# EUROPÄISCHE PATENTANMELDUNG

(11) **EP 4 564 206 A1**
(43) Veröffentlichungstag der Anmeldung: **04.06.2025**
(21) Anmeldenummer: 23212873.6
(22) Anmeldetag: 29.11.2023
(51) Int. Cl.: G06F 21/57

(54) **TECHNIKEN ZUM ERMITTELN VON AKTUELL IMPLEMENTIERTEN WINDOWS-VERSIONEN AUF RECHNEREINHEITEN**

(71) Anmelder: Deutsche Telekom AG, 53113 Bonn (DE)
(72) Erfinder: LIPPMANN, Nico, 32351 Stemwede (DE); Becker, Jonathan, 41462 Neuss (DE)
(74) Vertreter: Braun-Dullaeus Pannen Emmerling Patent- & Rechtsanwaltspartnerschaft mbB

(57) **Zusammenfassung**

Die vorliegende Erfindung betrifft Techniken zum Ermitteln von Windows-Versionen auf Rechnereinheiten umfassend die folgenden Schritte:
• Senden einer Anfrage über den verfügbaren RPC Service einer auf der Rechnereinheit implementierten Windows-Version, wobei die implementierte Windows-Version unbekannt ist;
• Erhalten einer Mehrzahl von eindeutigen Kennungen, insbesondere UUIDs, von der implementierten Windows-Version der Rechnereinheit, wobei jede der eindeutigen Kennungen einem Endpunkt des verfügbaren RPC Service zugeordnet ist;
• Bestimmung der aktuellen Version der implementierten Windows-Version der Rechnereinheit anhand der Mehrzahl von eindeutigen Kennungen, wobei eine bestimmte Windows-Version durch definierte eindeutige Kennungen festgelegt ist.

## Beschreibung

Die vorliegende Erfindung betrifft das technische Gebiet zum Ergreifen von Sicherheitsmaßnahmen bei Rechnereinheiten, insbesondere bezogen auf deren aktuell implementiertes Betriebssystem einer bestimmten Windows-Version. Hierzu sind ein entsprechendes Verfahren, eine Computereinheit sowie ein Computerprogramm angegeben.

Wenn ein Nutzer seine aktuelle Windows-Version auf seiner Recheneinheit, insbesondere einem PC, einem Notebook oder dergleichen, in Erfahrung bringen möchte, kann er sich durch die Systemeinstellungen klicken und dort die aktuelle Windows-Version erfragen.

Dies stellt allerdings eine recht mühsame, händische Vorgehensweise dar, die insbesondere für größere Unternehmen, die unter Umständen mehrere 1000 Rechnereinheiten in deren IT-Infrastruktur verwalten, nicht praktikabel und auch nicht automatisiert ist.

Gegenwärtig hat also eine IT-Security, beispielsweise eine unternehmensinterne Security, das Problem, dass es bei einem Sicherheitsscan der genutzten Computereinheiten der IT-Infrastruktur nicht möglich ist die tatsächlich aktuell implementierte Version des genutzten Windows Betriebssystems herauszufinden. Der Grund hierfür ist, dass Microsoft seit einer langen Zeit die gleiche Basis (Windows Kernel) nutzt, der von "außen" immer gleich aussieht.

Dies stellt die IT-Security vor die Herausforderung, dass, wenn Schwachstellen für eine bestimmte Windows-Version veröffentlicht werden, nicht durch einen Scan von "außen" herausgefunden werden kann, welche Rechnereinheiten betroffen sind. Aufgrund dieses fehlenden Asset- Managements kann die IT-Security als Folge nicht zielgerichtet agieren.

Der vorliegenden Erfindung liegt daher die Aufgabe zu Grunde, Techniken bereitzustellen, dies ermöglichen eine aktuell implementierte Windows-Version auf einer Recheneinheit effizient zu ermitteln und somit die eingangs genannten Nachteile des Stands der Technik zumindest zum Teil zu beseitigen.

Gelöst für diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Gemäß einem ersten Aspekt der Erfindung ist ein Verfahren zum Ermitteln von Windows-Versionen auf Rechnereinheiten angegeben, wobei das Verfahren die folgenden Schritte, insbesondere in der dargestellten Reihenfolge, umfasst:
- Senden einer Anfrage über den verfügbaren RPC Service einer auf der Rechnereinheit implementierten Windows-Version, wobei die implementierte Windows-Version unbekannt ist;
   ∘ der sogenannte RPC Service ist typischerweise auf allen Windows-Versionen vorhanden und es zudem möglich diesen RPC Service von außen, also beispielsweise über das Internet und/oder das Internet, zu erreichen;
   ∘ die Anfrage kann an die IP-Adresse der Rechnereinheit gesendet werden, insbesondere an den Netzwerkport 139 oder an einen anderen geeigneten Port zur Abfrage des verfügbare RPC Services; die IP-Adresse der Rechnereinheit kann bekannt sein oder automatisiert durch bekannte Methoden ermittelt werden;
   ∘ die Anfrage kann mittels einer Computereinheit gesendet werden, die beispielsweise als ein PC oder als ein Server ausgebildet ist. Die Computereinheit kann auch funktional durch mehrere verschiedene PCs und/oder Servereinheiten ausgebildet sein;
- Erhalten einer Mehrzahl von eindeutigen Kennungen, insbesondere UUIDs, der implementierten Windows-Version der Rechnereinheit, wobei jede der eindeutigen Kennungen einem Endpunkt des verfügbaren RPC Service zugeordnet ist;
   ∘ insbesondere können zunächst die Endpunkte erhalten werden, welche jeweils eine eindeutige UUID aufweisen, die den jeweiligen Endpunkt kennzeichnet. Diese UUIDs können beispielsweise durch einen entsprechend eingerichteten Algorithmus extrahiert werden;
   ∘ die eindeutigen Kennungen können von der Computereinheit empfangen werden;
- Bestimmung der aktuellen Version der implementierten Windows-Version der Rechnereinheit anhand der Mehrzahl von eindeutigen Kennungen, wobei eine bestimmte Windows-Version durch definierte eindeutige Kennungen festgelegt ist.
   ∘ Der IT-Security kann bekannt sein welche eindeutigen Kennungen zu einer bestimmten Windows-Version gehören. Diese Information kann beispielsweise in einem Vergleichsalgorithmus oder auch Bestimmungsalgorithmus implementiert werden, der die vorliegenden eindeutigen Kennungen entsprechend analysiert und feststellt welche Windows-Version diese entsprechen. Prinzipiell kann es zwar durchaus möglich sein, dass auch verschiedene Windows-Versionen dieselben eindeutigen Kennungen aufweisen, dies ist allerdings in der Regel nicht der Fall. Und selbst wenn dies der Fall wäre, kann dennoch festgestellt werden, zu welcher Teilmenge an Windows-Versionen die aktuell implementierte Windows-Version der Rechnereinheit zuzuordnen ist. Wird dann angenommen, dass auf der entsprechenden Rechnereinheit die Windows-Version mit dem schlechteren Sicherheitsniveau implementiert ist, kann auf jeden Fall sichergestellt werden, dass geeignete Maßnahmen ergriffen werden können, die die Sicherheitsgefahr nicht unterschätzen.

Das Verfahren ermöglicht es also vorteilhaft effizient, insbesondere automatisiert von außen, die implementierte Windows-Version auf einer Rechnereinheit zu ermitteln, sodass die IT-Security einen Überblick gewinnen kann, welche Sicherheitslücken in der IT-Infrastruktur vorhanden sind. Dies stellt eine Voraussetzung dafür dar, sodass effizient technische Sicherheitsmaßnahmen durchgeführt werden können. Auf diese Art könne beispielsweise ermittelt werden, dass die Versionsnummer der implementierten Windows-Version Windows 10 Version 22H2 ist.

Nachfolgend sollen an dieser Stelle noch einige vorstehend benutzte Begriffe erläutert werden:
Die verschiedenen Endpunkte (englisch "endpoints") in einem RPC-Dienst dienen dazu, verschiedene Aufgaben und Funktionen im Kontext der Kommunikation zwischen Client und Server zu erfüllen. Diese Endpunkte können typischerweise wie folgt verwendet werden:
1. Server-Endpunkt: Der Server-Endpunkt ist der Ort, an dem der RPC-Server auf Anfragen von Client-Anwendungen wartet. Hier werden die empfangenen Anfragen verarbeitet, die erforderlichen Aktionen durchgeführt und die Antworten an den Client zurückgesendet. Der Server-Endpunkt stellt die Schnittstelle für die vom Client angeforderten Dienste bereit.
2. Client-Endpunkt: Der Client-Endpunkt wird von der Client-Anwendung verwendet, um Anfragen an den Server zu senden. Die Client-Anwendung stellt eine Verbindung zum Server-Endpunkt her und verwendet den Client-Endpunkt, um die Anfragen zu übermitteln. Der Client-Endpunkt dient als Ausgangspunkt für die Kommunikation vom Client zur Serverseite.
3. Methoden- oder Funktionsendpunkte: Jede Methode oder Funktion im RPC-Dienst hat ihren eigenen Endpunkt. Der Client verwendet diese Endpunkte, um bestimmte Aktionen oder Berechnungen auf dem Server auszulösen. Der Name der Methode oder Funktion, zusammen mit den erforderlichen Parametern, wird an den entsprechenden Endpunkt gesendet, um die gewünschte Aufgabe auszuführen.
4. Naming Service Endpunkt: Ein Naming Service-Endpunkt wird verwendet, um Server-Endpunkte für bestimmte Dienste zu ermitteln. Der Client kann diesen Endpunkt verwenden, um den Server-Endpunkt für eine bestimmte Funktion zu finden, wenn der Dienst auf verschiedenen Servern bereitgestellt wird oder sich die Endpunkte dynamisch ändern.
5. Transportschicht-Endpunkt: Dies sind die Endpunkte für die Übertragung der Daten zwischen Client und Server. Je nach verwendeter Transportprotokoll können dies URLs, IP-Adressen und Ports oder andere Identifikatoren sein. Diese Endpunkte definieren den Weg, auf dem Daten zwischen den beiden Kommunikationspartnern übertragen werden.

Zusammenfassend dienen die verschiedenen Endpunkte in einem RPC-Dienst dazu, die Kommunikation zu steuern, Dienste bereitzustellen und Daten zwischen Client und Server auszutauschen. Jeder Endpunkt hat eine spezifische Rolle und Funktion in diesem Prozess, und sie arbeiten zusammen, um die Remote-Aufrufe von Funktionen und Methoden zwischen verschiedenen Anwendungen oder Systemen zu ermöglichen.

Der Port 139 ist ein Netzwerkport, der hauptsächlich mit dem Windows-Datei- und Druckfreigabedienst in Verbindung steht. Dieser Port wird normalerweise für das Server Message Block (SMB)-Protokoll verwendet, das in Windows-Umgebungen zur gemeinsamen Nutzung von Dateien, Ordnern, Druckern und anderen Ressourcen in einem Netzwerk verwendet wird.

In einer bevorzugten Ausführungsform wird die eindeutigen Kennungen der zu bestimmenden implementierten Windows-Version der Rechnereinheit in einem Finger-Abdruckdatensatz hinterlegt, wobei die Bestimmung der aktuell implementierten Windows-Version der Rechnereinheit mittels einer Analyse des Finger-Abdruckdatensatzes durchgeführt wird.

Der Finger-Abdruckdatensatz kann erzeugt werden, um die eindeutigen Kennungen beispielsweise Partnern zur Verfügung zu stellen, die diese analysieren wollen. Dies wird hierdurch ermöglicht, dass die Auswertung flexibler vorgenommen werden kann und nicht gleich zum Zeitpunkt des Erhalts eindeutigen Kennungen vorgenommen werden muss, sondern beispielsweise an den entsprechenden Bestimmungsalgorithmus, der auch auf alle anderen Computereinheit implementiert sein kann, übergeben werden. Insbesondere kann der Finger-Abdruckdatensatz auch verschlüsselt und verschlüsselt übertragen werden. Dies ermöglicht den Anwendungsfall, dass ein Unternehmen über seine Sicherheitsschwachstellen Kenntnis erlangen möchte, sich von einer externen Firma die eindeutigen Kennungen zusammenstellen lässt, diese Informationen allerdings nur intern analysieren möchte.

Bevorzugt wird die Bestimmung mittels einer zuvor auf das Erkennen von Windows-Versionen trainierten künstlichen Intelligenz und/oder mittels einer statistischen Auswertung, insbesondere unter Zuhilfenahme von Referenz-Finger-Abdruckdatensätzen bekannter Windows-Versionen, durchgeführt.

Eine künstliche Intelligenz kann trainiert werden, welche eindeutigen UUIDs zu einer bestimmten Windows-Version gehören. Dies kann insbesondere dann von Vorteil sein, wenn nicht für alle Windows-Versionen die entsprechenden eindeutigen UUlDs bekannt sind oder die Liste der zurückgegebenen UUIDs unvollständig ist und quasi "geraten" werden muss zu welcher Windows-Version die erhaltenen eindeutigen Kennungen gehören. Hierzu ist die künstliche Intelligenz besonders gut geeignet und kann eine mögliche Windows-Version entsprechend ausgeben. Es kann allerdings auch eine statistische Analyse durchgeführt werden, die beispielsweise wie folgt ablaufen kann: wenn die erhaltenen eindeutigen Kennungen zu 100 % mit den bekannten eindeutigen Kennungen einer bestimmten Windows-Version übereinstimmen, dann entspricht die aktuell implementierte Windows-Version dieser bekannten Windows-Version. Wenn die eindeutigen Kennungen beispielsweise zu 90 % mit einer ersten bekannten Windows-Version übereinstimmen und nur zu 80 % mit einer zweiten bekannten Windows-Version, dann kann festgestellt werden, dass die implementierte Windows-Version wahrscheinlich zu der ersten bekannten Windows-Version gehört.

In einer bevorzugten Ausführungsform der Erfindung versendet die Rechnereinheit als Antwort auf die Anfrage nach den verfügbaren RPC Service die Endpunkte, die der RPC Service umfasst, wobei jeder Endpunkt jeweils eine eindeutige Kennung umfasst, und wobei die eindeutigen Kennungen aus den Endpunkten extrahiert werden.

Vorzugsweise ermittelt die Bestimmung einen Score S der angibt mit welcher Wahrscheinlichkeit die implementierte Windows-Version einer anderen bekannten Windows-Version entspricht. Der Score kann beispielsweise von 0-1 reichen, wobei die Eins der höchsten Wahrscheinlichkeit entspricht.

Auf vorteilhafter Weise gewährleistet dieser Score eine Einschätzung vornehmen zu können, wie sehr man dem Ergebnis der Bestimmung vertraut. Wird beispielsweise bestimmt, dass die implementierte Windows-Version der aktuellsten Windows-Version entspricht, wobei der Score lediglich einen geringen Wert angibt von S = 0,1 angibt, sollte vielleicht dennoch Sicherheitsmaßnahmen an der entsprechenden Rechteeinheit vorgenommen werden, da das Ergebnis (sehr) unsicher ist. Es ist zudem möglich, die Fingerabdruck-Datenbank zu aktualisieren, wobei die Aktualisierung der Fingerabdruck-Datenbank dazu führen kann, dass ein anderer, respektive aktualisierter, Score berechnet wird.

Referenz-Finger-Abdruckdatensätze bekannter Windows-Versionen können wie folgt erzeugt werden:
- Kennzeichnen eines zu erzeugenden Referenz-Finger-Abdruckdatensatzes mit der bekannten Windows-Version; beispielsweise könnte der Name der bekannten Windows-Version, insbesondere die Versionsnummer, in den Header Daten des Referenz-Finger-Abdruckdatensatzes eingeschrieben werden oder der Dateiname des Referenz-Finger-Abdruckdatensatzes trägt die entsprechende Bezeichnung;
- Erzeugung des Referenz-Finger-Abdruckdatensatzes,
- Senden einer Anfrage über den verfügbaren RPC Service an eine weitere Rechnereinheit auf der die bekannte Windows-Version installiert ist;
- Erhalten einer Mehrzahl von eindeutigen Kennungen, insbesondere UUIDs, von der bekannten Windows-Version der weiteren Rechnereinheit, wobei jede der eindeutigen Kennungen einem Endpunkt des verfügbaren RPC Service zugeordnet ist; wie vorstehend beschrieben ist es auch möglich zunächst die Endpunkte zu erhalten, die jeweils eine eindeutige Kennung umfassen und diese eindeutige Kennung dann zu extrahieren;
- Hinterlegung der Mehrzahl an eindeutigen Kennungen in dem Referenz-Finger-Abdruckdatensatz der bekannten Windows-Version. Beispielsweise ist es möglich die eindeutigen Kennungen in der Form einer Tabelle oder einer Liste in dem Referenz-Finger-Abdruckdatensatz zur Verfügung stellen.

Diese Referenz-Finger-Abdruckdatensätze können nun vorgehalten, verkauft und/oder verteilt werden, um sie bei entsprechender Gelegenheit zu nutzen und mit den erhaltenen eindeutigen Kennungen der Rechnereinheiten zu vergleichen, deren Windows-Version bestimmt werden soll. Es ist insbesondere vorteilhaft, wenn der Finger-Abdruckdatensatz und der Referenz-Finger-Abdruckdatensatz ein identisches Format aufweisen, da diese dann einfacher verglichen werden kann.

Bevorzugt werden technische Sicherheitsmaßnahmen für die Rechnereinheiten in Abhängigkeit der bestimmten Windows- Version durchgeführt werden.

Dies hat den Vorteil, dass die Sicherheitsmaßnahmen effizient nur dann und in einer anderen Weise vorgenommen werden, wie sie wirklich notwendig sind, wodurch Ressourcen geschont werden. Wird beispielsweise ermittelt, dass die implementierte Windows-Version auf einer Rechnereinheit die aktuellste ist, müssen in der Regel keine diesbezüglichen Sicherheitsmaßnahmen eingeleitet werden. Wird festgestellt, dass eine erste implementierte Windows-Version zwei Jahre alt ist und eine zweite implementierte Windows-Version vier Jahre alt ist, so werden in der Regel die technischen Sicherheitsmaßnahmen bei der vier Jahre alten implementierten Windows-Version umfangreicher ausfallen.

In einer weiteren Ausführungsform werden die technischen Sicherheitsmaßnahmen in Abhängigkeit vor dem ermittelten Score durchgeführt.

Dies hat den Vorteil, dass je nachdem wie sicher man sich sein kann, dass die implementierte Windows-Version korrekt festgestellt wurde, die technischen Sicherheitsmaßnahmen entweder so ausgeführt werden können, dass sie der ermittelten implementierten Windows-Version entsprechen oder dass sie umfassender ausfallen, als es eigentlich für die ermittelte Windows-Version der Fall wäre. Wird also beispielweise mit einem Score von S= 0,95 festgestellt, dass eine erste implementierte Windows-Version vier Jahre alt ist, dann können zielgerichtet die Sicherheit Maßnahmen für eine vier Jahre alte Windows-Version durchgeführt werden. Wird auf der anderen Seite beispielsweise mit einem Score von S = 0,40 festgestellt, dass eine zweite implementierte Windows-Version zwei Jahre alt ist, können trotzdem die Sicherheitsmaßnahmen für die vier Jahre alte Windows-Version durchgeführt werden, um das Risiko für den Fall auszuschließen, dass die implementierte Windows-Version nicht korrekt ermittelt wurde.

In einer Ausführungsform werden die technischen Sicherheitsmaßnahmen in Abhängigkeit von den Hardware Ressourcen der Rechnereinheit durchgeführt.

Dies hat den Vorteil, dass nur solche Sicherheitsmaßnahmen auf der rechten Einheit durchgeführt werden, die von dieser auch hardwaretechnisch bewerkstelligt werden können. Beispielsweise ist es nicht immer möglich, dass ältere Rechnereinheiten die neueste Windows-Version aufgespielt bekommen, da deren Prozessor und/oder deren Arbeitsspeicher unter Umständen hierfür nicht ausgelegt ist.

In einer bevorzugten Ausführungsform umfassen die technischen Sicherheitsmaßnahmen:
- Aufspielen einer anderen Windows-Version, insbesondere einer neu verfügbaren Windows-Version;
- Senden einer Mitteilung über den Sicherheitsstand der Recheneinheit an dessen Nutzer, wobei sich der Nutzer nicht auf einen einzelnen Nutzer beschränkt, sondern auch eine IT-Abteilung und/oder Unternehmen umfassen kann;
- Herunterfahren der Rechnereinheit mit der aktuellen Windows-Version;
- Abtrennen der Recheneinheit von Netzwerk, insbesondere vom Internet;
- Anpassung der auf der Rechnereinheit ausführbaren Applikationen und/oder Services im Hinblick auf das Sicherheitslevel, dass der aktuell implementierten Windows-Version auf der Rechnereinheit entspricht. Hierbei ist auch möglich Freigaben entsprechend einzurichten, sodass beispielsweise eine bestimmte Rechnereinheit bestimmte Services nicht mehr ausführen darf. Dies hat insbesondere auch den Vorteil, dass dies bei Rechteeinheiten angewendet werden kann, bei denen keine andere Windows-Version mehr aufgespielt werden kann und dass diese trotzdem für ein Unternehmen weiter nutzbar sind.

Diese technischen Sicherheitsmaßnahmen haben den Vorteil, dass sie jeweils einzeln und/oder in Kombination effizient das Sicherheitslevel der Rechnereinheit erhöhen. Insbesondere können diese technischen Sicherheitsmaßnahmen auch zentrale automatisiert gestartet und/oder ausgeführt werden.

In einer Ausführungsform wird der verfügbare RPC Service Rechnereinheit vermittels des Internets und/oder des internen Netzwerks eines Unternehmens angefragt.

Dies hat den Vorteil, dass beispielsweise die IT-Security "zentral" und/oder automatisiert eine Bestimmung der entsprechenden Windows-Versionen der Rechnereinheiten durchführen kann. Dies ermöglicht zudem den Fall, dass es ein Unternehmen als externe Dienstleistung anbietet, die Windows-Versionen eines anderen Unternehmens, das beispielsweise kein entsprechendes Know-how hierfür besitzt, zu ermitteln.

In einer Ausführungsform wird die aktuelle Windows-Version für jede Rechnereinheit einer IT-Infrastruktur eines Unternehmens, insbesondere automatisiert, ermittelt.

Dies bietet den Vorteil, dass beispielsweise eine IT Security einen Überblick über alle Windows-Versionen der multiplen Rechnereinheiten eines Unternehmens auf einen Blick bekommen kann.

In einer Ausführungsform werden die technischen Sicherheitsmaßnahmen zielgerichtet und angepasst für die Rechnereinheit der IT-Infrastruktur durchgeführt.

Dies erhöht auf vorteilhafter Weise die Effizienz beim Durchführen von Sicherheitsmaßnahmen. So kann es beispielsweise sein, dass eine Rechnereinheit zwar eine veraltete, insbesondere eine sicherheitskritische-Windows-Version implementiert hat, dass diese Rechnereinheit aber in einem Teil der IT-Infrastruktur genutzt wird, in der dies trotzdem kein Sicherheitsrisiko darstellt. Die entsprechende Rechnereinheit muss dann unter Umständen gar nicht upgedatet werden. Zudem ist es möglich eine Rechnereinheit nur bis zu einer bestimmten Windows-Version upzudaten, bei der die Performance der Rechnereinheit nicht merklich abnimmt, falls dies unter Sicherheitsaspekten vertretbar ist.

Gemäß einem zweiten Aspekt der Erfindung ist eine Computereinheit zum Ermitteln von Windows-Versionen auf Rechnereinheiten angegeben, wobei die Computereinheit aufweist:
- ein Interface zu einem Internet und/oder Intranet, wobei das Interface eingerichtet ist zum Senden von Abfragen und/oder zum Erhalten von eindeutigen Kennungen von Endpunkten, die einem RCP Service einer Windows-Version zugeordnet sind
- eine Prozessoreinheit, eingerichtet zum Senden eine Anfrage über den verfügbaren RPC Service einer auf der rechten Einheit implementierten Windows-Version der Rechteeinheit vermittels des Interface, insbesondere indem die Recheneinheit über deren IP-Adresse und im Besonderen deren Netzwerk Port 139 angesprochen wird;
- einen Bestimmungsalgorithmus der eingerichtet ist die aktuelle Version der implementierten Windows-Version der Rechnereinheit anhand einer Mehrzahl von eindeutigen Kennungen zu bestimmen, wobei eine bestimmte Windows-Version durch definierte eindeutige Kennungen festgelegt ist,
- wobei die Computereinheit eingerichtet ist zur Ausführung der Schritte des vorstehend beschriebenen Verfahrens.

Gemäß einem dritten Aspekt der Erfindung ist ein Computerprogramm angegeben, umfassend Befehle, die bei der Ausführung des Programms durch eine Computereinheit diese veranlassen, die Schritte des vorstehend beschriebenen Verfahrens auszuführen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt eine Computereinheit zur Durchführung des erfindungsgemäßen Verfahrens;
- Fig. 2:: zeigt ein erfindungsgemäßes Computerprogramm;
- Fig. 3:: zeigt eine Gegenüberstellung von eindeutigen UUID Kennungen zweier verschiedener Windows-Versionen;
- Fig. 4:: einen von dem RPC-Service an die Computereinheit übermittelten Endpunkt;
- Fig. 5:: zeigt ein Flussdiagramm eines zweiten Ausführungsbeispiels des erfindungsgemäßen Verfahrens;
- Fig. 6:: zeigt ein Flussdiagramm eines dritten Ausführungsbeispiels des erfindungsgemäßen Verfahrens;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

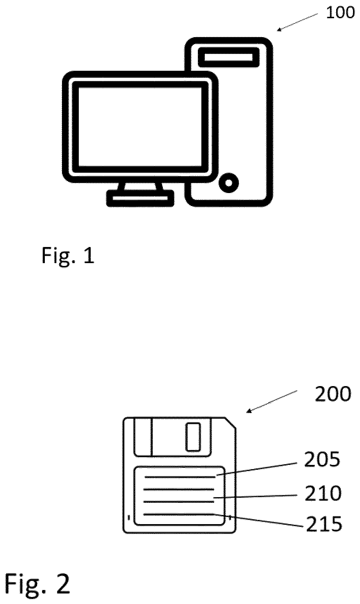

Fig. 1 zeigt eine Computereinheit 100, auch als Rechnereinheit 100 bezeichnet, zur Durchführung des erfindungsgemäßen Verfahrens.

Das erfindungsgemäße Verfahren kann beispielsweise auf dem Computerprogramm 200, insbesondere dem Computerprogramm-Produkt 200, dargestellt in Fig. 2 vorgesehen sein.

Das Verfahren umfasst zumindest die folgenden Schritte, wobei die nachholende Aufzählung der Schritt keine zwingende Reihenfolge impliziert, soweit technisch auch eine andere Reihenfolge möglich sind:
- Schritt 205: Senden einer Anfrage über den verfügbaren RPC Service einer auf der Rechnereinheit implementierten Windows-Version, wobei die implementierte Windows-Version unbekannt ist;
- Schritt 210: Erhalten einer Mehrzahl von eindeutigen Kennungen, insbesondere UUIDs, von der implementierten Windows-Version der Rechnereinheit, wobei jede der eindeutigen Kennungen einem Endpunkt des verfügbaren RPC Service zugeordnet ist;
- Schritt 215: Bestimmung der aktuellen Version der implementierten Windows-Version der Rechnereinheit anhand der Mehrzahl von eindeutigen Kennungen, wobei eine bestimmte Windows-Version durch definierte eindeutige Kennungen festgelegt ist.

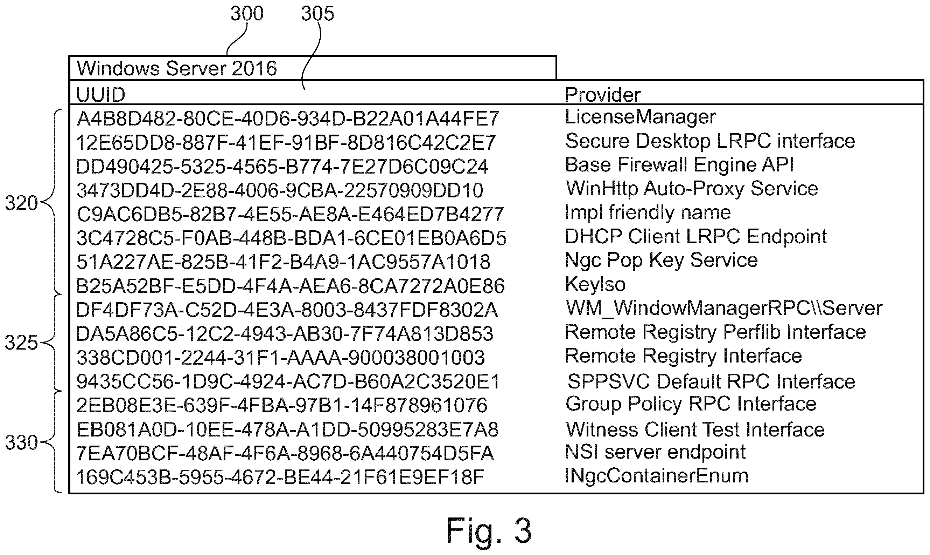

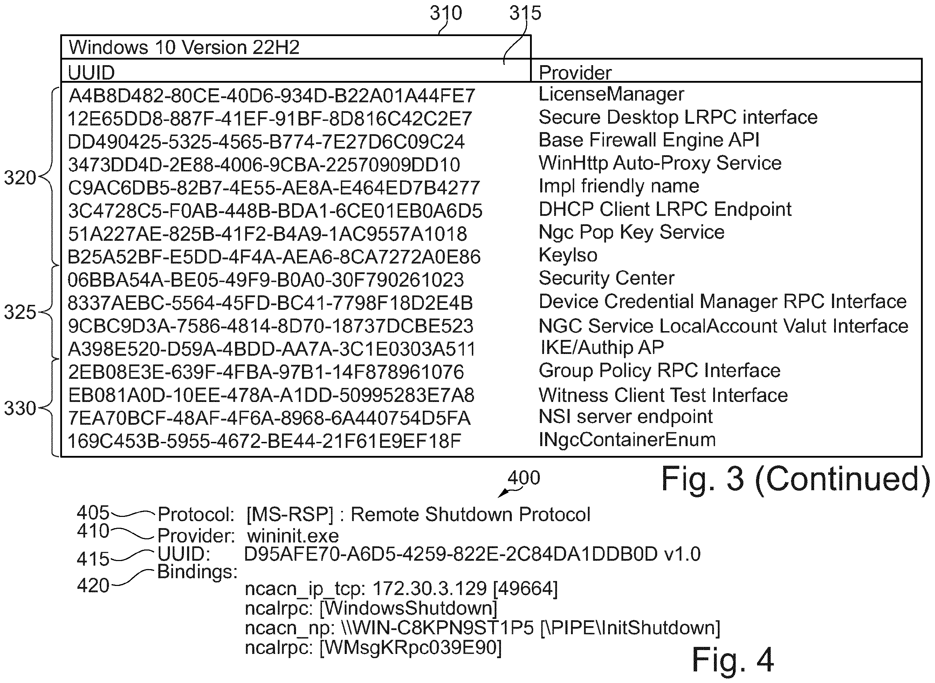

Fig. 3 zeigt links für eine erste Windows-Version "Windows Server 2016" 300 die zu dieser Version gehörenden eindeutigen ersten UUID Kennungen 305, die vermittels der RCP Abfrage ermittelt werden können. Auf dem rechten Teil der Abbildung sind für eine zweite Windows-Version "Windows 10 Version 22H2" 310 die zu dieser Version gehörenden eindeutigen zweiten UUID Kennungen 315 gelistet.

Es ist zu sehen, dass beide Windows-Versionen 300, 310 bezüglich einer ersten Teilmenge 320 und einer dritten Teilmenge 330 in ihren UUID Kennungen 305, 315 übereinstimmen. Eine zweite Teilmenge 325 zeigt aber unterschiedliche UUID Kennungen für die beiden Windows-Versionen 300, 310.

Entsprechen also die durch das Verfahren extrahierten UUID Kennungen einer noch unbekannten Windows-Version beispielsweise den zweiten UUID Kennungen 315 kann durch einen Vergleichsalgorithmus bestimmt werden, dass es sich bei der unbekannten Windows-Version um die Windows-Version "Windows 10 Version 22H2" handelt.

Fig. 4 zeigt einen von dem RPC-Service an die Computereinheit 100 übermittelten Endpunkt 400. Der Endpunkt 400 kann die folgenden Datenfelder umfassen:
Protokoll 405, welches das Protokoll bezeichnet; Provider 410, welches angibt, "wer" Endpunkt registriert hat; UUID 415, als die eindeutige Kennung des Endpunkts 400; Bindings 420, wobei die beiden links Zusatzinfos bereitstellen so unter anderem auch die IP-Adresse unter der der Service direkt erreichbar ist;

Ein Algorithmus kann dahingehend programmiert werden, um die eindeutige Kennung, also die UUID 415, aus dem übermittelten Endpunkt 400 zu extrahieren.

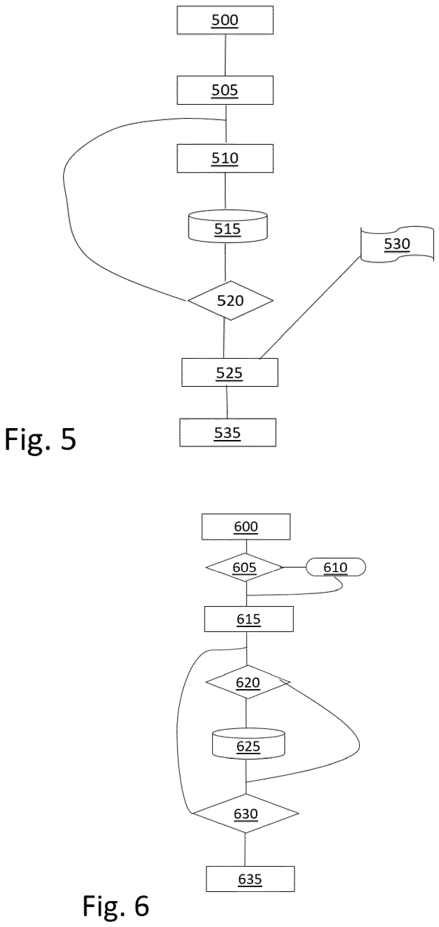

Fig. 5 zeigt ein Flussdiagramm eines zweiten Ausführungsbeispiels des erfindungsgemäßen Verfahrens;

In Schritt 500 wird eine IP-Adresse der zu untersuchenden Rechnereinheit auf der Computereinheit 100, wobei das Computerprogramm 200 auf der Computereinheit 100 implementiert sein kann, verwendet, um die Anfrage nach den Endpunkten der implementierten Windows-Version an die Rechnereinheit zu senden. Es ist zudem möglich, dass der Schritt 500 in einer Art Schleife über alle Rechteeinheiten einer IT-Umgebung läuft.

In Schritt 505 fragt die Computereinheit 100 über den RCP Service der Rechnereinheit die entsprechenden Endpunkte der implementierten Windows-Version an. Für die Anfrage kann beispielsweise die die Open-Source library "impacket" von Python verwendet werden, um die Endpunkte aus zu lesen. Beispielsweise kann die Anfrage durch folgenden Befehl realisiert werden "python3 rpcdump.py 127.0.0.1" der die vollständige Liste der Endpunkte der Rechnereinheit an die Computereinheit 100 sendet.

In Schritt 510 empfängt die Computereinheit 100 einen Endpunkt 400 und kann aus diesem die eindeutige UUID Kennung 415 extrahieren und beispielsweise in einem Finger-Abdruckdatensatz 515 hinterlegen. Es kann sein, dass die Rechnereinheit alle Endpunkte in einem einzigen Datenpaket übermittelt, sodass in Schritt 510 für alle übermittelten Endpunkte 400 die jeweils eindeutige UUID Kennung 410 extrahiert und in den Finger-Abdruckdatensatz 515 gespeichert wird. Es allerdings eine mögliche Variation, dass die Endpunkte von der Rechnereinheit nacheinander in verschiedenen Datenpaketen übermittelt werden. In diesem letzteren Fall wird in der Verzweigung 520 überprüft, ob schon alle Endpunkte 400 gemäß Schritt 510 verarbeitet wurden. Ist dies nicht der Fall, wird die Schleife solange fortgesetzt, bis alle Endpunkte 400 verarbeitet sind. Sind alle Endpunkte verarbeitet folgt der nächste Schritt.

In Schritt 525 ist ein Bestimmungsalgorithmus, insbesondere auf der Computereinheit 100, implementiert, der die aktuelle Version der implementierten Windows-Version der Rechnereinheit anhand der Mehrzahl von eindeutigen Kennungen bestimmt. Hierzu kann der Bestimmungsalgorithmus in der Form eine trainierte künstlichen Intelligenz und/oder in der Form eines funktional aufgebauten herkömmlichen Programmcodes ausgebildet sein, wobei die letztere Alternative bevorzugt auf einer statistischen Auswertung beruht. Für die entsprechende Bestimmung können dem Algorithmus zudem Referenz-Finger-Abdruckdatensätze 530 bekannter Windows-Versionen über ein Dateninterface zur Verfügung gestellt werden, wobei der Bestimmungsalgorithmus in diesem Fall den Finger-Abdruckdatensätze mit den Referenz-Finger-Abdruckdatensätzen 530 vergleichen kann. Prinzipiell ist es aber auch möglich, die Windows-Version ohne Finger-Abdruckdatensätze zu bestimmen, weil Informationen auch in den entsprechenden Algorithmen oder in der trainierten künstlichen Intelligenz schon "implementiert" sein kann. Funktional könnte man aber trotzdem sagen, dass die Finger-Abdruckdatensätze dennoch in den entsprechenden Algorithmen oder in der trainierten Intelligenz - wenn auch in einer anderen Form - vorhanden sind.

In Schritt 535 kann dann beispielsweise eine IT-Security die folgenden technischen Sicherheitsmaßnahmen einleiten, wenn festgestellt wird, dass die implementierte Windows-Version Sicherheitsmängel aufweist.

Die technischen Sicherheitsmaßnahmen umfassen:
- Aufspielen einer anderen Windows-Version, insbesondere der neu ist verfügbaren Windows-Version;
- Senden einer Mitteilung über den Sicherheitsstand der Recheneinheit an dessen Nutzer;
- Abtrennen der Recheneinheit von Netzwerk, insbesondere vom Internet;
- Anpassung der auf der Rechnereinheit ausführbaren Applikationen und/oder Services im Hinblick auf das Sicherheitslevel, dass der aktuell implementierten Windows-Version auf der Rechnereinheit entspricht;

Fig. 6 zeigt ein Flussdiagramm das illustriert, wie Referenz-Finger-Abdruckdatensätze generiert werden können - also gewissermaßen eine Library Creation.

In Schritt 600 wird die IP-Adresse der Rechnereinheit, die Windows-Version, der Windows Typ und das Windows Build gesetzt.

In der Verzweigung 605 wird durch den Nutzer festgelegt, ob der Windows Type ein Server oder ein Client ist. Handelt es sich bei der Rechnereinheit um einen Server, setzt der Nutzer im Voraus parallel zu den anderen Daten aus Schritt 600 "set active directory status" - was sich bei Schritt 615 durch "ad:no" widerspiegelt.

Schritt 610: "Set active directory status" wird bei Windows Servern ausgeführt, da bei Windows Clients in der Regel kein "active directory" installiert ist.

In Schritt 615 kann beispielsweise folgender Input übergeben werden: "Windows IP: 127.0.0.1; Windows Version: 1607, Windows type: Windows Server 2016, Windows build 14393.693; ad: no" dann können die Endpunkte des RCP Service der Rechnereinheit gescannt werden.

In der Verzweigung 620 wird für jeden Endpunkt überprüft, ob die UUID 415 dieses Endpunktes in derselben Version, build und type in dieser Form schon existiert, ist dies der Fall, so wird die Schleife von vorne fortgesetzt bis die Überprüfung in der Verzweigung 630 ergibt, dass der letzte Endpunkt erreicht ist. Ist dies nicht der Fall, so wird die UUID 415 des Endpunktes in Schritt 625 in einer Datenbank gespeichert.

In Schritt 635 wird der Prozess abgeschlossen, wobei am Ende des Prozesses ein Finger-Abdruckdatensatz 515 erzeugt und insbesondere auch gespeichert wird, der eine bestimmte Windows Version kennzeichnet und der für das Verfahren gemäß Fig. 5 verwendet werden kann. Mit anderen Worten: Mit dem Verfahren gemäß Fig. 6 werden Libraries von Windows Versionen erzeugt.

## Patentansprüche

1. Verfahren zum Ermitteln von Windows-Versionen auf Rechnereinheiten (100) umfassend die folgenden Schritte:
• Schritt (205): Senden einer Anfrage über den verfügbaren RPC Service einer auf der Rechnereinheit (100) implementierten Windows-Version (300, 310), wobei die implementierte Windows-Version (300, 310) unbekannt ist;
• Schritt (210): Erhalten einer Mehrzahl von eindeutigen Kennungen (415), insbesondere UUIDs, von der implementierten Windows-Version der Rechnereinheit, wobei jede der eindeutigen Kennungen einem Endpunkt des verfügbaren RPC Service zugeordnet ist;
• Schritt (215): Bestimmung der aktuellen Version der implementierten Windows-Version der Rechnereinheit anhand der Mehrzahl von eindeutigen Kennungen, wobei eine bestimmte Windows-Version durch definierte eindeutige Kennungen festgelegt ist.

2. Verfahren nach Anspruch 1, wobei die eindeutigen Kennungen der zu bestimmenden implementierten Windows-Version der Rechnereinheit in einem Finger-Abdruckdatensatz (515) hinterlegt wird, wobei die Bestimmung der aktuell implementierten Windows-Version der Rechnereinheit mittels einer Analyse des Finger-Abdruckdatensatzes durchgeführt wird.

3. Verfahren nach einem der Ansprüche 1 bis 2, wobei die Bestimmung mittels einer zuvor auf das Erkennen von Windows-Versionen trainierten künstlichen Intelligenz und/oder mittels einer statistischen Auswertung, insbesondere unter Zuhilfenahme von Referenz-Finger-Abdruckdatensätzen (530) bekannter Windows-Versionen, durchgeführt wird.

4. Verfahren nach einem der vorhergehenden Ansprüche, wobei die Rechnereinheit als Antwort auf die Anfrage nach den verfügbaren RPC Service die Endpunkte versendet, die der RPC Service umfasst, wobei jeder Endpunkt jeweils eine eindeutige Kennung umfasst, und wobei die eindeutigen Kennungen aus den Endpunkten extrahiert werden.

5. Verfahren nach einem der vorhergehenden Ansprüche, wobei die Bestimmung einen Score ermittelt der angibt mit welcher Wahrscheinlichkeit die implementierte Windows-Version einer anderen bekannten Windows-Version entspricht.

6. Verfahren nach einem der Ansprüche 3 bis 5, wobei die jeweiligen Referenz-Finger-Abdruckdatensätze bekannter Windows-Versionen wie folgt erzeugbar sind:
• Kennzeichnen eines zu erzeugenden Referenz-Finger-Abdruckdatensatzes mit der bekannten Windows-Version;
• Erzeugung des Referenz-Finger-Abdruckdatensatzes,
• Senden einer Anfrage über den verfügbaren RPC Services an eine weitere Rechnereinheit auf der die bekannte Windows-Version installiert ist;
• Erhalten einer Mehrzahl von eindeutigen Kennungen, insbesondere UUIDs, von der bekannten Windows-Version der weiteren Rechnereinheit, wobei jede der eindeutigen Kennungen einem Endpunkt des verfügbaren RPC Service zugeordnet ist;
• Hinterlegung der Mehrzahl an eindeutigen Kennungen in dem Referenz-Finger-Abdruckdatensatz der bekannten Windows-Version.

7. Verfahren nach einem der Ansprüche, wobei technische Sicherheitsmaßnahmen für die Rechnereinheiten in Abhängigkeit der bestimmten Windows-Version durchgeführt werden.

8. Verfahren nach Anspruch 5 und 7, wobei die technischen Sicherheitsmaßnahmen in Abhängigkeit von dem ermittelten Score durchgeführt werden.

9. Verfahren nach einem der Ansprüche 7 und 8, wobei die technischen Sicherheitsmaßnahmen in Abhängigkeit von den Hardware Ressourcen der Rechnereinheit durchgeführt werden.

10. Verfahren nach einem der Ansprüche 7 - 9, wobei die technischen Sicherheitsmaßnahmen umfassen:
• Aufspielen einer anderen Windows-Version, insbesondere der neu ist verfügbaren Windows-Version;
• Senden einer Mitteilung über den Sicherheitsstand der Recheneinheit an dessen Nutzer;
• Abtrennen der Recheneinheit von Netzwerk, insbesondere vom Internet;
• Anpassung der auf der Rechnereinheit ausführbaren Applikationen und/oder Services im Hinblick auf das Sicherheitslevel, dass der aktuell implementierten Windows-Version auf der Rechnereinheit entspricht;

11. Verfahren nach einem der vorhergehenden Ansprüche, wobei der verfügbare RPC Service Rechnereinheit vermittels des Internets und/oder des Internets angefragt wird.

12. Verfahren nach einem der vorhergehenden Ansprüche, wobei die aktuelle Windows-Version für jede Rechnereinheit einer IT-Infrastruktur eines Unternehmens ermittelt wird.

13. Verfahren nach Anspruch 10 und 12, wobei die technischen Sicherheitsmaßnahmen zielgerichtet und angepasst für die Rechnereinheiten der IT-Infrastruktur durchgeführt werden.

14. Computereinheit zum Ermitteln von Windows-Versionen auf Rechnereinheiten aufweisend:
• ein Interface zu einem Internet und/oder Intranet, wobei das Interface eingerichtet ist zum Senden von Abfragen und/oder zum Erhalten von eindeutigen Kennungen von Endpunkten, die einem RCP Service einer Windows-Version zugeordnet sind
• eine Prozessoreinheit, eingerichtet zum Senden eine Anfrage über den verfügbaren RPC Service einer auf der rechten Einheit implementierten Windows-Version der Rechteeinheit vermittels des Interface, insbesondere indem die Recheneinheit über deren IP-Adresse und im Besonderen deren Netzwerk Port 139 angesprochen wird;
• einen Bestimmungsalgorithmus der eingerichtet ist die aktuelle Version der implementierten Windows-Version der Rechnereinheit anhand einer Mehrzahl von eindeutigen Kennungen zu bestimmen, wobei eine bestimmte Windows-Version durch definierte eindeutige Kennungen festgelegt ist,
• wobei die Computereinheit eingerichtet ist zur Ausführung der Schritte des Verfahrens nach den Ansprüchen 1 - 13.

15. Computerprogramm, umfassend Befehle, die bei der Ausführung des Programms durch eine Computereinheit diese veranlassen, die Schritte des Verfahrens nach einem der Ansprüche 1 - 13 auszuführen.
